# EUROPEAN PATENT APPLICATION

(11) **EP 1 986 379 A1**
(43) Date of publication of application: **29.10.2008**
(21) Application number: 07714080.4
(22) Date of filing: 13.02.2007
(51) Int. Cl.: H04L 12/56, H04Q 7/38

(54) **WIRELESS DATA COMMUNICATION SYSTEM**

(30) Priority: 13.02.2006 JP 2006034662; 02.02.2007 JP 2007023655
(71) Applicant: Hitachi, Ltd., Chiyoda-ku Tokyo 100-8220 (JP)
(72) Inventor: TAKATANI, Yukihiro, Kawasaki-shi, Kanagawa 215-0013 (JP); HAYASHI, Masato, Kawasaki-shi, Kanagawa 215-0013 (JP); IKENOZA, Shota, Tokyo 101-8608 (JP)
(74) Representative: Strehl Schübel-Hopf & Partner
(86) International application number: PCT/JP2007/052498
(87) International publication number: WO 2007/094308

(57) **Abstract**

A communication system which includes first to third terminals which belong to a first network, and the first and the third terminals belong to a second network. The first terminal transmits a first packet generated by the first terminal to a second terminal through the first network. When the second terminal receives the first packet, the second terminal monitors a route between the first and the second terminals. When the monitored results satisfy prescribed conditions, the second terminal transmits a second packet to the third terminal. When the third terminal receives the second packet, the third terminal transmits a third packet, which indicates that the third terminal can be connected to the second network, to the second terminal.

## Description

### INCORPORATION BY REFERENCE

The present application claims priorities from Japanese patent applications No. JP2007-023655 filed on February 2, 2007 and No. JP2006-034662 filed on February 13, 2006, the contents of which are hereby incorporated by reference into this application.

### TECHNICAL FIELD

The present invention relates to a technique to conduct wireless communication.

### BACKGROUND ART

Recently, a technique in which each terminal automatically communicates with terminals on the periphery without needing the existing network infrastructure (an ad hoc network) has been in progress of being studied and developed.

Here, there is a technique to realize the route switching by finding an alternative route when the quality of the route (wireless link) between the terminals which are provided with an interface to connect to the wireless LAN (hereinafter, it will be called a wireless LAN I/F) has been deteriorated (refer to JP-A-2004-282270).

### DISCLOSURE OF INVENTION

### PROBLEM TO BE SOLVED BY THE INVENTION

In JP-A-2004-282270, it is only referred to the route switching within the wireless LAN and it is not considered the route switching in a network in which there are a plurality of communication media (for example, a wireless LAN and a mobile telephone network). Therefore, in the above-mentioned network, for example, when the quality of the wireless link within the wireless LAN has been deteriorated, there is a problem that it cannot be connected to the mobile telephone network promptly. Then, the object of the present invention is to provide a system in which, in a network in which there are a plurality of communication media, when the quality of the wireless link has been deteriorate, a terminal can conduct the mobile telephone connection promptly instead of the wireless LAN.

### MEANS FOR SOLVING THE PROBLEM

In order to solve the above-mentioned problem, one of the preferred embodiments of the present invention is as the following.

A communication system is provided with first to third terminals which belong to a first network, and the first and the third terminals belong to a second network. The first terminal transmits a first packet generated by the first terminal to a second terminal through the first network. When the second terminal receives the first packet, the second terminal monitors a route between the first and the second terminals. When the monitored results satisfy prescribed conditions, the second terminal transmits a second packet to the third terminal. When the third terminal receives the second packet, the third terminal transmits a third packet, which indicates that the third terminal can be connected to the second network, to the second terminal. Also, the second terminal, on receiving the third packet, conducts communication with the first terminal through the third terminal.

### ADVANTAGES OF THE INTENTION

According to the present invention, it is possible to provide a system in which a terminal can conduct the mobile telephone connection promptly instead of the wireless LAN when the quality of the wireless link has been deteriorated. Other objects, features and advantages of the present invention will become apparent from the following description of the embodiments of the present invention taken in conjunction with accompanying drawings.

### BEST MODE FOR CARRYING OUT THE INVENTION

It will be explained about embodiments of the present invention using the drawings below.

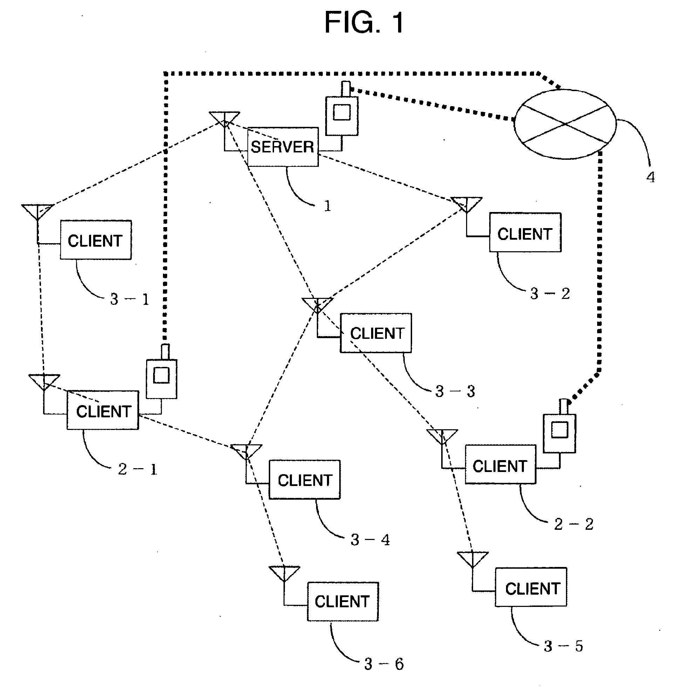

FIG. 1 is a system configuration diagram of an embodiment of a communication system according to the present invention.

The communication system shown in FIG. 1 is configured with a plurality of terminals (server, clients) and these are connected via a wireless LAN and a mobile telephone network 4.

A server 1 and a client 2 (2-1, 2-1) are provided with a wireless LAN I/F and a mobile telephone. Client 3 (3-1∼3-6) is provided with a wireless LAN I/F but is not provided with a mobile telephone. Each terminal extends a wireless link (a thin broken line) with adjacent terminals via the wireless LAN and constructs an ad hoc network. Also, the server 1 and the client 2 can be connected to the mobile telephone network 4 by the mobile telephone (a thick broken line) other than via the wireless LAN. The available area of the mobile telephone network 4 is assumed to be larger than the communication area of the wireless LAN. Here, the wireless link shown in FIG. 1 changes according to the conditions. Therefore, for example, it is possible that a wireless link is formed between 3-4 and 2-2 which is not shown here.

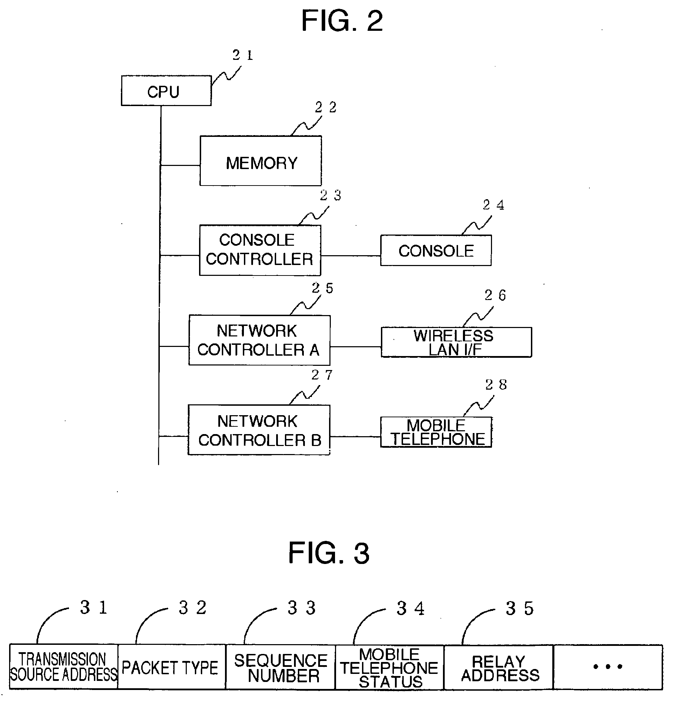

FIG. 2 is a hardware configuration diagram of a terminal.

The terminal is configured with a CPU 21 which controls the operation of the entire terminal executing programs of a memory 22, the memory 22 which stores data such as a program, etc., a console controller 23 which controls a console 24, the console 24 with which a user performs input and output, a network controller A 25 which controls a wireless LAN I/F 26, the wireless LAN I/F 26, a network controller B 27 which controls a mobile telephone 28, and the mobile telephone 28. Here, in the client 3, the network controller B 27 and the mobile telephone 28 do not exist.

FIG. 3 is a diagram showing a format of a packet. In this embodiment, a notification packet, a warning packet, and a warning cancellation packet are handled.

The packet is configured with a transmission source address 31 which indicates the address of the terminal which generated said packet, a packet type 32 which indicates the type of said packet, a sequence number 33 which indicates a number which is incremented by one every time a new packet is generated, a mobile telephone status 34 which indicates whether the terminal which generated the packet is in the mobile telephone connection or not, and a relay address 35 which indicates the address of the terminal which relayed the packet.

Here, in the field of the mobile telephone status 34, normally no information is stored, but when said packet is the notification packet and the terminal which generated the packet is the client 2 and the client 2 is in connection to the server 1 via the mobile telephone, information which is "in connection to server 1" (information to decide whether the client 2 or 3 is able to be connected to the server 1 or not) is stored. Also, when the terminal relays the packet, it adds its own address to the relay address 35. When the packet is relayed a plurality of times, the addresses of the terminals which relayed it are stored in order. When the packet is the warning packet or the warning cancellation packet, the field of 34 and 35 are not necessary.

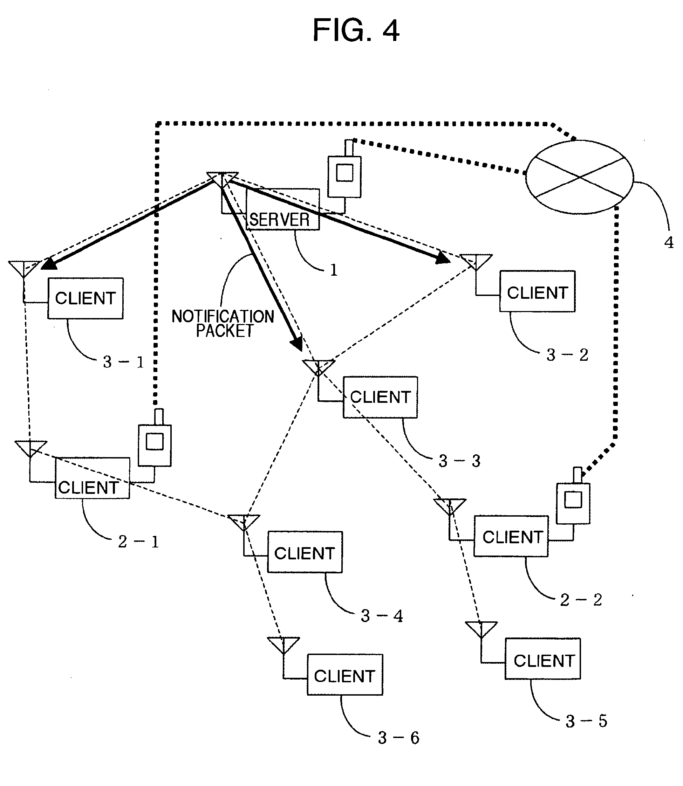

FIG. 4 is a diagram showing the situation in which the server 1 transmits the notification packet. The notification packet is a packet which is transmitted so that each terminal can confirm whether the wireless link between each terminal can be used or not.

The server 1 periodically transmits the notification packet to the clients 2 and 3 via the wireless LAN. The notification packet, first, reaches the clients 3-1, 3-2, and 3-3 which are adjacent to the server 1. These terminals, on receiving the notification packet, update an adjacent terminal information tables (which will be described later) which each terminal has and transmits said notification packet via the wireless LAN. By repeating this, the notification packet is sent to all the terminals which are connected to the wireless LAN. In order to avoid transmitting the same notification packet a plurality of times, each terminal is provided with a function to discard the notification packet which it has previously received. The terminal which received the notification packet decides that it can be connected to the server 1 via the wireless LAN.

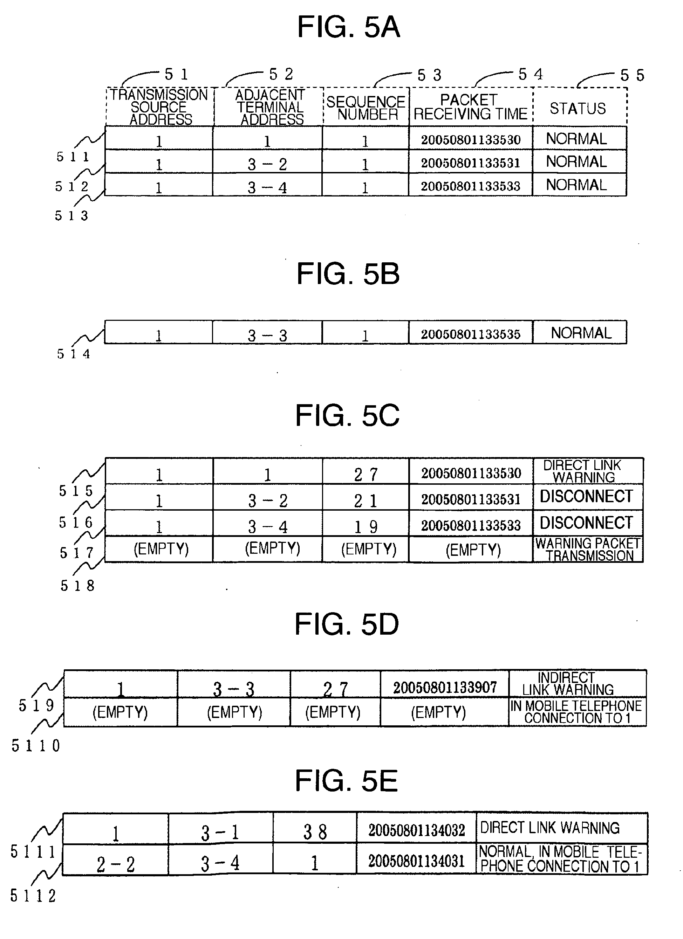

FIG. 5 is a diagram showing the adjacent terminal information table.

The adjacent terminal information table is configured with a transmission source address 51 which indicates the address of the terminal which generated the notification packet, an adjacent terminal address 52 which indicates the address of the adjacent terminal which transmitted said packet, a sequence number 53 which indicates the sequence number which is recorded in the notification packet which is received last, packet receiving time 54 which indicates the time when the notification packet is received last, and a status 55 which indicates the status of the communication route to the server 1, and the clients 2 and 3 hold this table.

When a new entry is registered in the adjacent terminal information table, the client periodically measures the quality of the wireless link between the corresponding adjacent terminal. The information of the quality of the wireless link can be obtained by inquiring of the wireless LAN driver. For example, in LINUX (registered trademark) it can be realized using an iwconfig command and an iwspy command of Wireless Extension Support.

If the measured quality of the wireless link is good, information of "normal" is stored in the corresponding status 55 of the adjacent terminal information table, and if it has been deteriorated, information of "direct link warning" is stored. Here, it is supposed that "direct link" indicates the wireless link between its own terminal and the adjacent terminal and "indirect link" indicates the wireless link far from its own terminal by 2 hops or more. The criteria whether the quality of the wireless link is good or not can be determined by the user taking in consideration various conditions. Other than these, if it is in the condition in which the wireless link is disconnected, "disconnect" is stored, if it is in the mobile telephone connection, "in mobile telephone connection" is stored, and if the quality of the indirect link has been deteriorated, "indirect link warning" is stored.

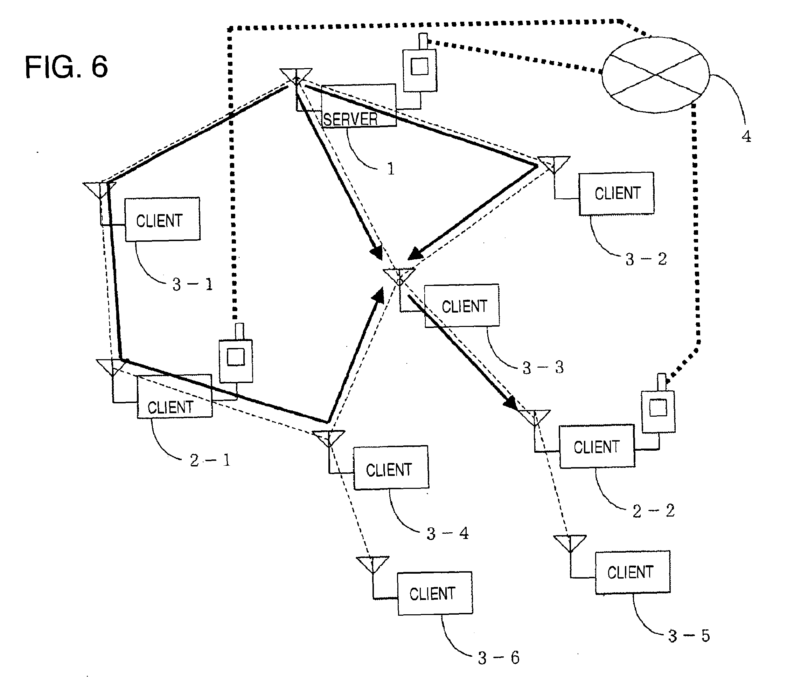

FIG. 6 is a diagram showing the situation in which the clients 3-3 and 2-2 receive the notification packet generated by the server 1. In the network topology in this figure, the client 3-3 receives the notification packet via the client 3-2, and via the clients 3-1, 2-1, 3-4 other than receiving it directly from the server 1. The client 2-2 receives it via the client 3-3.

FIG. 5A shows the adjacent terminal information table which the client 3-3 of FIG. 6 has and there are three entries 511∼513. 511 indicates that the notification packet is received directly from the server 1. Namely, it indicates that the notification packet generated by the server 1 (51) is received from the server 1 which is the adjacent terminal (52) and the route through which said notification packet has passed is normal (55). In the same way, 512 indicates that it is received via the client 3-2 and 513 indicates that it is received via the client 3-4.

FIG. 5B shows the adjacent terminal information table which the client 2-2 of FIG. 6 has, and there is one entry 514. 514 indicates that the notification packet is received via the client 3-3.

FIG. 7 is a diagram showing the situation in which the client 3-3 transmits the warning packet. The warning packet is a packet to warn the adjacent terminals that there is a possibility that soon the communication with the server 1 becomes not available.

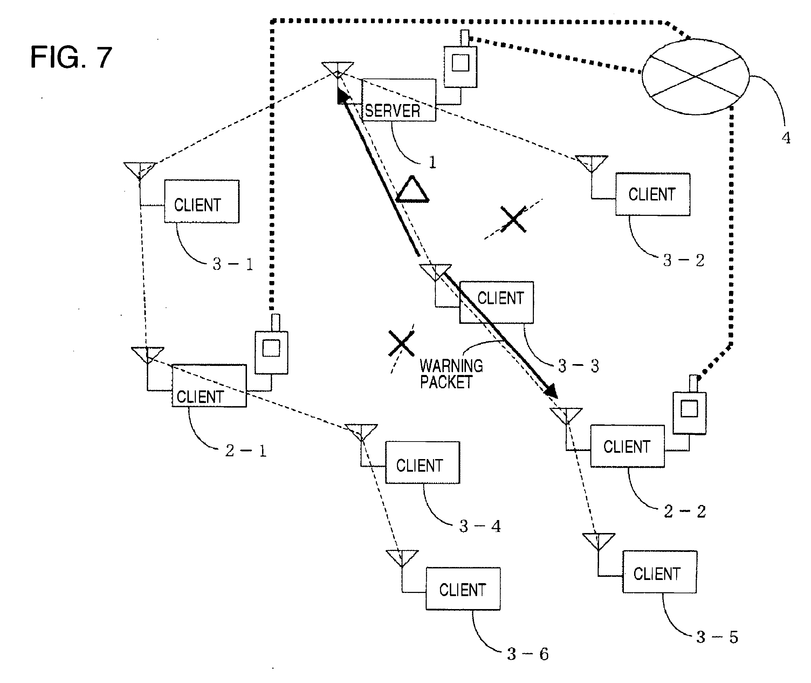

The client 2 or 3, when there is no route with the status 55 being "normal" among the routes with which it can communicate with the server 1 via the wireless LAN in the adjacent terminal information table, transmits the warning packet to give a warning to the adjacent terminals. In FIG. 7, the wireless links between the clients 3-2 and 3-3, and between 3-3 and 3-4 are in the disconnect condition and the qualities of the wireless link of the server 1 and the client 3-3 are in the deteriorated condition. At this time, the client 3-3 broadcasts the warning packet to the adjacent terminals.

FIG. 5C shows the adjacent terminal information table of the client 3-3 in FIG. 7 and there are 4 entries 515∼518. The status 55 of 515 indicates "direct link warning" and the statuses 55 of 516 and 517 indicate "disconnect". 518 indicates that its own terminal transmitted the warning packet, and in the status 55 information of "warning packet transmission" is stored and the fields other than that are "empty". In this way, when there is no entry with the status 55 being "normal" in said table, the client adds the entry of "warning packet transmission" to the adjacent terminal information table and transmits the warning packet to the adjacent terminals with which it can communicate. Here, the timing when the warning packet is transmitted is not limited to the case where there is no entry being "normal".

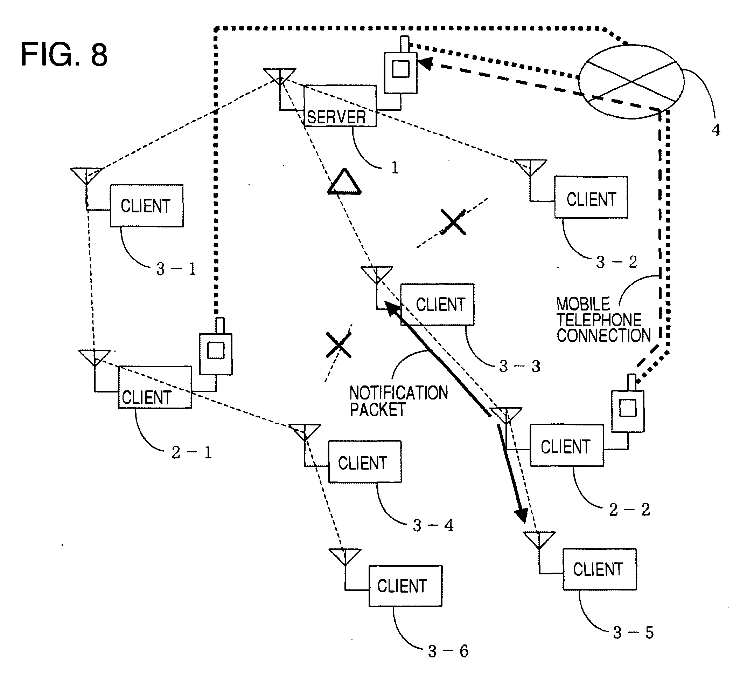

FIG. 8 is a diagram showing the situation in which the client 2-2 transmits the notification packet.

The client 2-2, on receiving the warning packet from the client 3-3, updates the adjacent terminal information table. Said adjacent terminal information table becomes in the condition in which there is no entry with the status 55 being "normal". At this time, as the client 2-2 can communicate with the server 1 via the mobile telephone, starts the connection by the mobile telephone. At the same time, the client 2-2 starts periodical generation and transmission of the notification packet. In the mobile telephone status 34 of the notification packet which the client 2-2 transmits, information of "in connection to server 1" is stored. The terminal connected to the client 2-2 via the wireless LAN, on receiving this notification packet, can know that it can communicate with the server 1 via the client 2-2.

Here, in the case where the client 2-2 is not provided with the mobile telephone, when it receives the warning packet, it becomes in the condition in which there is no entry with the status 55 being "normal", but as it cannot conduct the mobile telephone connection, the warning packet is supposed to be transmitted instead of the notification packet. Namely, the case where the client generates and transmits the notification packet is when the client is provided with the mobile telephone and it is in the situation in which its own terminal cannot communicate with the server unless it uses its own mobile telephone.

FIG. 5D shows the adjacent terminal information table of the client 2-2 in FIG. 8 and there are two entries 519, 5110. The status 55 of 519 is "indirect link warning". Namely, it indicates that the quality of the wireless link between 3-2 and 3-3, etc. which is far by 2 hops or more has been deteriorated. Also, 5110 indicates that its own terminal is in the mobile telephone connection to the server 1, in the status 55 information of "in mobile telephone connection to server 1" is stored, and the fields other than that are "empty".

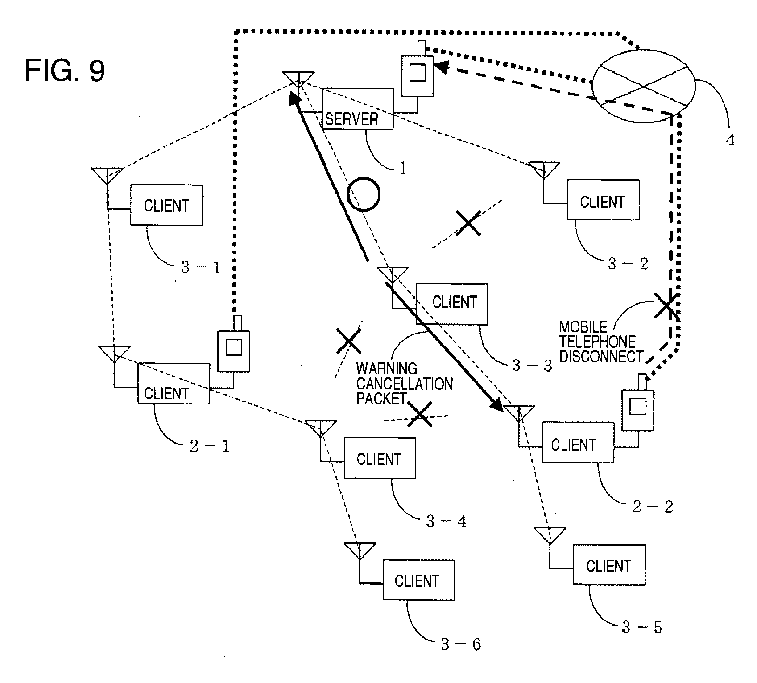

FIG. 9 is a diagram showing the situation in which the client 3-3 transmits the warning cancellation packet. The warning cancellation packet is a packet to cancel the information of that the warning packet was transmitted in the past.

Here, the quality of the wireless link between the server 1 and the client 3-3 has been recovered. Then, the client 3-3 generates the warning cancellation packet and transmits it to the adjacent terminals. The client 2-2, on receiving this, updates the entries with the status 55 being "indirect link warning" to "normal" about the corresponding entries of the adjacent terminal information table, terminates the mobile telephone connection, and terminates the generation and transmission of the notification packet.

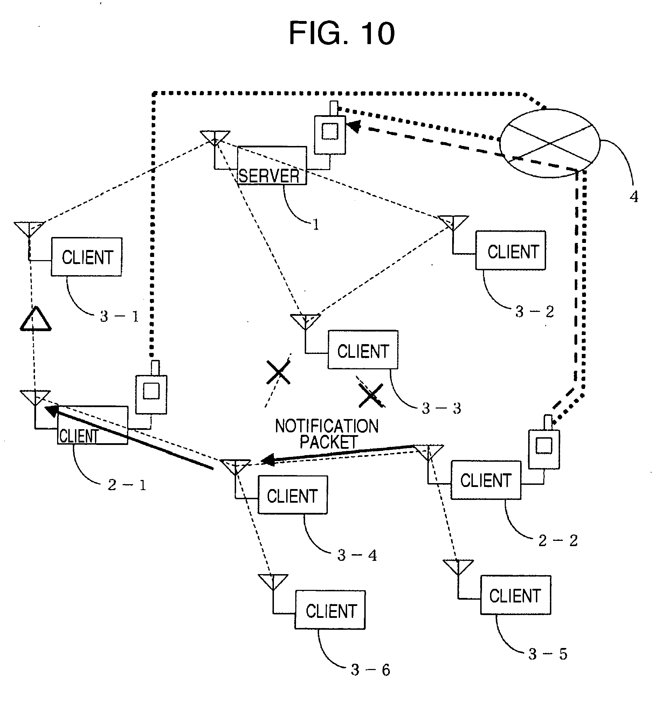

FIG. 10 is a diagram showing a condition in which the quality of the wireless link of the clients 3-1 and 2-1 has been deteriorated while the client 2-2 is in the mobile telephone connection.

The client 2-1 is informed of that there is a possibility that it cannot communicate with the server 1 via the client 3-1, but as the client 2-1 knows that there is another route to communicate with the server 1 by receiving the notification packet generated by the client 2-2, it does not start the connection by the mobile telephone. Then, it conducts the communication with the server 1 via the client 2-2. In this way, it is enough for the terminal within the wireless LAN to use only the mobile telephone of the client 2-2 by that the terminal which is in the mobile telephone connection transmits the notification packet.

FIG. 5E shows the adjacent terminal information table of the client 2-1 in FIG. 10 and there are two entries 5111, 5112. The status 55 of 5111 is "direct link warning". Also, in the status 55 of 5112, information that the quality of the wireless link between the client 3-4 is "normal" and it can communicate with the server 1 via the mobile telephone is stored.

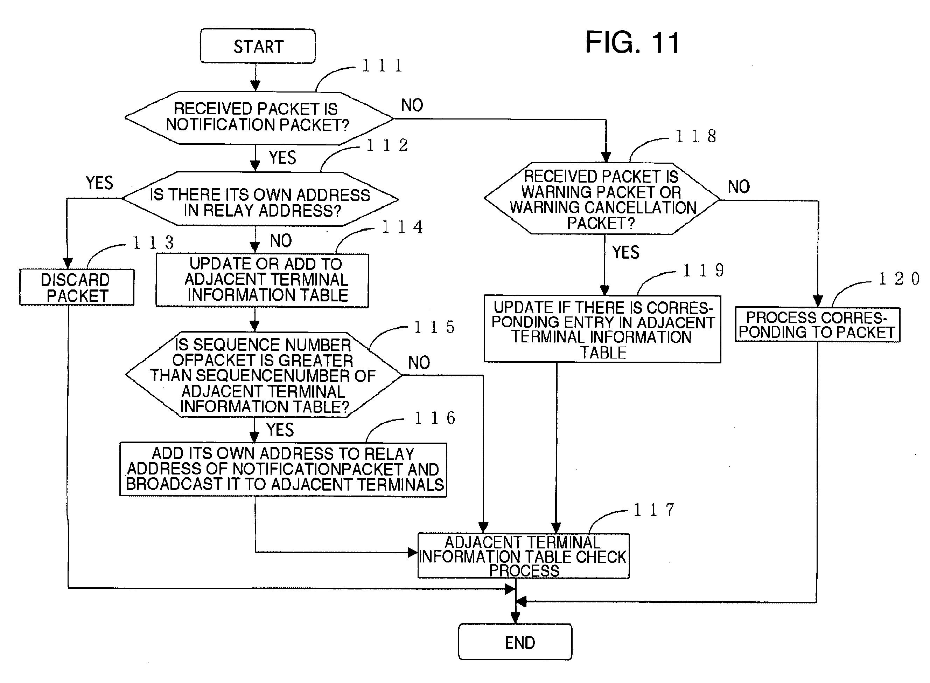

FIG. 11 is a flow chart when the client 3 receives the packet. The process is performed by that the CPU 21 of the client executes the programs stored in the memory 22.

The client inspects whether said packet is the notification packet or not by the packet type 32 (step 111). If it is the notification packet, the client inspects whether the address of its own terminal is in its relay address 35 or not (step 112). If there is, the client determines that it has received this notification packet in the past and discards the packet (step 113), and terminates the process. If there is not, the client updates or adds to the adjacent terminal information table according to the information of the received notification packet (step 114).

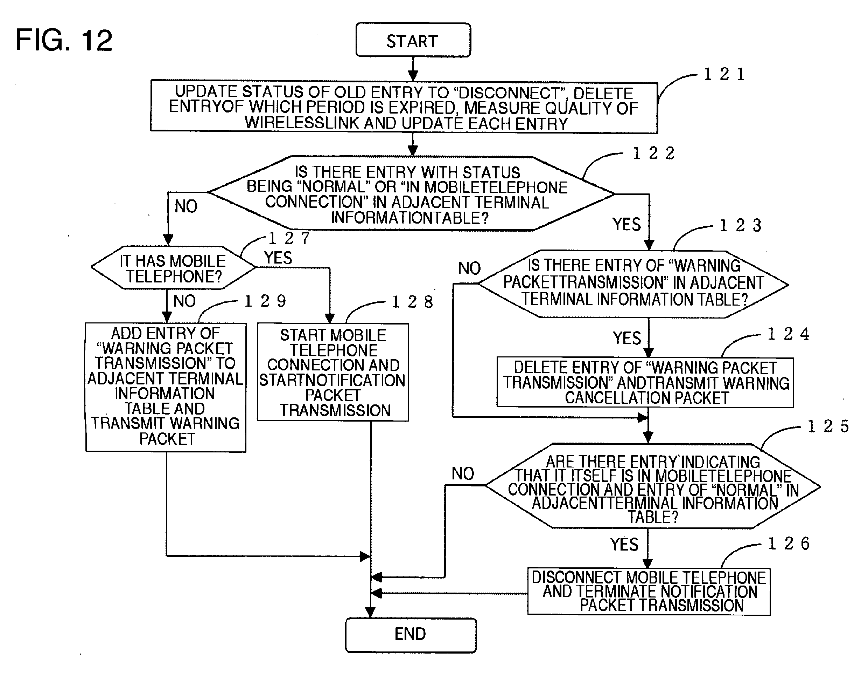

Next, the client inspects whether the sequence number 33 within the packet is greater than the sequence number 53 of the adjacent terminal information table or not (step 115). If it is grater, the client adds its own address to the relay address 35 in said notification packet, broadcasts the notification packet to the adjacent terminals (step 116), performs an adjacent terminal information table check process (step 117) (it will be described in detail at FIG. 12), and terminates the process. At the step 115, if it is smaller, the process proceeds to the step 117.

At the step 111, if it is not the notification packet, the client inspects whether said packet is the warning packet or the warning cancellation packet or not (step 118). If it is the warning packet or the warning cancellation packet, only when there is a corresponding entry in the adjacent terminal information table, the information is updated (step 119) and the process is terminated through the step 117.

At the step 118, when it is not the warning packet nor the warning cancellation packet, a process corresponding to said packet is performed (step 120), but as this is not related to this embodiment, the detail explanation will be omitted.

FIG. 12 is a flow chart of the adjacent terminal information table check process. The adjacent terminal information table check process is a process including delete of entry of which period is expired, measurement of the quality of the wireless link between the adjacent terminal, control of the mobile telephone connection, etc. This process may be performed every definite time or may be performed when the packet is received.

The client first refers to the packet receiving time 54 of each entry of the adjacent terminal information table and makes the status 55 of the entry which has not received the notification packet during a definite time be the condition of "disconnect". Also, about the entry which has not received the notification packet during a definite time from when it became the condition of "disconnect", the client determines that there is no need to hold the information and deletes the entry. Further, about each adjacent terminal which is registered in the adjacent terminal information table, the client measures the quality of the wireless link and if it is good, updates the status 55 to be "normal" and if it has been deteriorated, updates the status 55 to be "direct link warning" (step 121).

Next, the client confirms whether there is an entry with the status 55 being "normal" or "in mobile telephone connection" in the adjacent terminal information table or not (step 122). If there is, the client inspects whether there is an entry with the status 55 being "warning packet transmission" in the adjacent terminal information table or not (step 123). If there is, the client deletes that entry of "warning packet transmission" and transmits the warning cancellation packet to the adjacent terminals (step 124). Then, the client confirms whether there are an entry which indicates that its own terminal is in the mobile telephone connection and an entry being "normal" or not (step 125). If there are, the client disconnects the mobile telephone connection and at the same time terminates the transmission of the notification packet 30 (step 126), and terminates the process.

At the step 123, when there is no entry, the process proceeds to the step 125. Also, at the step 125, when there is no entry, the process is terminated.

At the step 122, when there is no entry, the client confirms whether its own terminal has the mobile telephone or not (step 127). When it has the mobile telephone, the client starts the connection to the server 1 via the mobile telephone, generates the notification packet and starts the periodical transmission (step 128). When it does not have the mobile telephone, the client adds the entry of "warning packet transmission" to the adjacent terminal information table, generates the warning packet and transmits the same to the adjacent terminals (step 129).

Next, it will be explained about an embodiment which connects the mobile telephone network and the wireless LAN using VPN (VIRTUAL PRIVATE NETWORK).

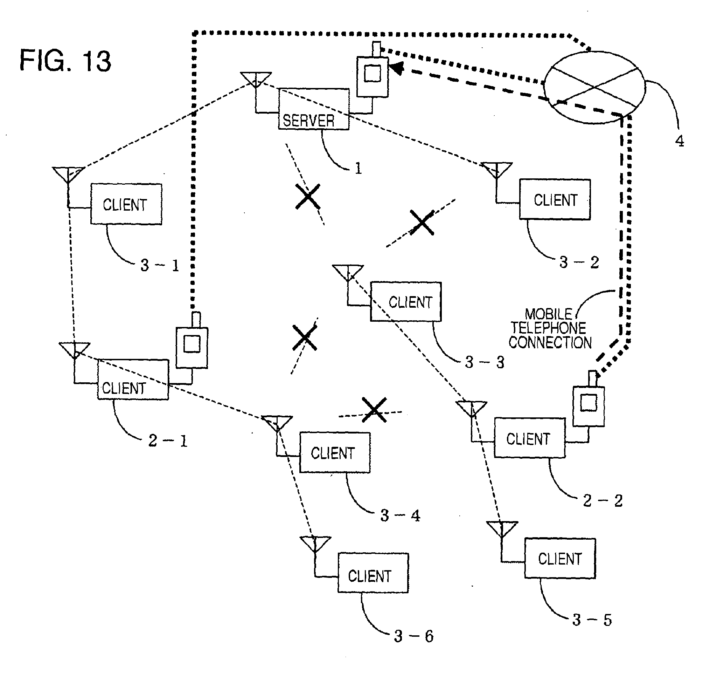

FIG. 13 is a diagram showing a system divided into two ad hoc networks.

In FIG. 13, the wireless links between the clients 3-2 and 3-3, between the client 3-3 and the server 1, between the clients 3-4 and 2-2, and 3-3 and 3-4 are in the disconnect condition. Namely, it is divided into the first ad hoc network to which the server 1, the clients 3-1, 3-2, 2-1, 3-4, 3-6 belong and the second ad hoc network to which the clients 3-3, 2-2, 3-5 belong.

The server 1, the client 2 (2-1, 2-1) and the client 3 (3-1∼3-6) transmit and receive a routing control packet 143 and determine the communication route between other terminals.

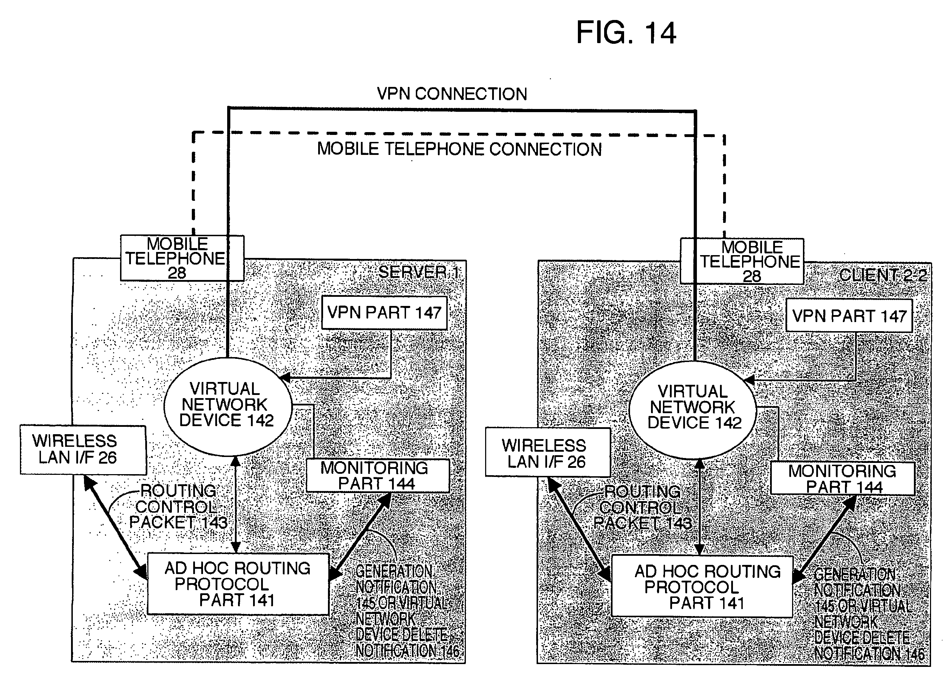

FIG. 14 is a software configuration diagram within the terminal when the server 1 and the client 2-2 construct VPN on the mobile telephone network.

As a software to construct VPN, for example, there is VTUN (http://vtun.sourceforge.net/).

In the storage devices within the server 1 and the client 2, a VPN part 147 which constructs VPN and generates and deletes a virtual network device 142, a monitoring part 144 which monitors whether the virtual network device 142 is generated or not, and programs such as an ad hoc routing protocol part 141 which transmits and receives the routing control packet 143 via the wireless LAN I/F 26, etc. are stored. Below, in order to simplify, it will be described as though these programs are the subjects, but it is needless to say that in reality the CPU is the subject which executes the programs. Here, the programs and data within the storage device may be previously stored in the storage device, may be input from the storage media such as CD-ROM, etc., or may be downloaded from another device via the network. Also, the function realized by said program may be realized by dedicated hardware.

First, each VPN part 147 within the server 1 and the client 2-2 constructs VPN between each other and forms the virtual network device 142 within each terminal. Here, the virtual network device 142 can be created regardless of the hardware.

When the virtual network device 142 is formed, the monitoring part 144 transmits a virtual network device generation notification 145 to the ad hoc routing protocol part 141. The ad hoc routing protocol part 141, on receiving this, starts transmitting and receiving the routing control packet 143 to the virtual network device 142 in addition to the wireless LAN I/F 26. Thereby, the server 1 and the client 2-2 can transmit and receive the routing control packet 143 via VPN and as a result the first ad hoc network to which the server 1 belongs and the second ad hoc network to which the client 2-2 belongs can be connected. Namely, the first ad hoc network and the second ad hoc network are connected via VPN and one ad hoc network is formed as a whole.

When the VPN connection is disconnected by the cause such as that the mobile telephone connection is disconnected, etc., the VPN parts 147 of the server 1 and the client 2-2 delete the virtual network device 142 of each. At this time, the monitoring part 144 transmits a virtual network device delete notification 146 to the ad hoc routing protocol part 141. The ad hoc routing protocol part 141, on receiving this, knows that the virtual network device 142 has been deleted and returns the transmitting and receiving of the routing control packet 143 only to the wireless LAN I/F 26.

In FIG. 14, the server 1 and the client 2-2 directly construct VPN, but a server to construct VPN may be arranged on the mobile telephone network or on another network which is connectable from the mobile telephone network and the server 1 and the client 2-2 may construct VPN between the server to construct VPN and may conduct communication via the server to construct VPN respectively (refer to JP-A-2006-13734). In comparison with this method, in the method shown in FIG. 14, it is possible to connect to VPN easily without newly arranging the server to construct VPN.
The above description has been disclosed about the embodiments, but the present invention is not limited to these and it is apparent to those skilled in this art that various changes and modifications can be done within the scope of the spirit of the present invention and the appended claims.

### BRIEF DESCRIPTION OF THE DRAWINGS

FIG. 1 is a configuration diagram of an embodiment of a communication system of the present invention.
FIG. 2 is a hardware configuration diagram of a terminal.
FIG. 3 is a diagram showing a format of a packet.
FIG. 4 is a diagram showing the situation in which a server transmits a notification packet.
FIG. 5A is a diagram showing an adjacent terminal information table.
FIG. 5B is a diagram showing the adjacent terminal information table.
FIG. 5C is a diagram showing the adjacent terminal information table.
FIG. 5D is a diagram showing the adjacent terminal information table.
FIG. 5E is a diagram showing the adjacent terminal information table.
FIG. 6 is a diagram showing the situation in which clients receive the notification packet of the server.
FIG. 7 is a diagram showing the situation in which the client transmits a warning packet.
FIG. 8 is a diagram showing the situation in which the client transmits the notification packet.
FIG. 9 is a diagram showing the situation in which the client transmits a warning cancellation packet.
FIG. 10 is a diagram showing a condition in which the quality of the wireless link has been deteriorated.
FIG. 11 is a flow chart when the client receives the packet.
FIG. 12 is a flow chart of an adjacent terminal information table check process.
FIG. 13 is a diagram showing a system divided into two ad hoc networks.
FIG. 14 is a software configuration diagram within the terminal when the server and the client construct VPN on a mobile telephone network.

## Claims

1. A communication system comprising first to third terminals which belong to a first network wherein said first and said third terminals belong to a second network, wherein:
said first terminal transmits a first packet generated by said first terminal to said second terminal via said first network;
said second terminal, on receiving said first packet, monitors a route between said first and said second terminals;
said second terminal, when monitored results of said route satisfy prescribed conditions, transmits a second packet to said third terminal; and
said third terminal, on receiving said second packet, transmits a third packet which indicates that said third terminal can be connected to said second network to said second terminal.

2. A communication system of claim 1, wherein said second terminal, on receiving said third packet, conducts communication with said first terminal via said third terminal.

3. A communication system of claim 1, wherein in said first packet an address of said first terminal, a type of said first packet, and information which indicates that said first terminal can be connected to said second network are stored.

4. A communication system of claim 1, wherein said second packet is information which indicates that quality of said route has been deteriorated.

5. A communication system of claim 1, wherein said second terminal, when the monitored results of said route do not satisfy prescribed conditions, adds address of said second terminal to said first packet and transmits the same to the third terminal.

6. A communication system of claim 1, wherein said second terminal, after transmitting said second packet, when the quality of said route has been recovered, transmits a fourth packet which indicates that the quality of said route has been recovered to said third terminal.

7. A communication system of claim 1, wherein said second terminal, when it has received once said first packet, discards said first packet.

8. A communication system of claim 1, wherein said first network is a wireless LAN and said second network is a mobile telephone network.

9. A communication system of claim 1, wherein said first terminal and said third terminal connect said first network and said second network by constructing a virtual network on said second network.

10. A terminal connected to first and second terminals which belong to a second network via a first network, wherein
when the terminal receives a first packet generated by said first terminal, monitors a route between said first terminal;
when monitored results of said route satisfy prescribed conditions, the terminal transmits a second packet to said second terminal; and
when the terminal receives a third packet which indicates that said second terminal can be connected to said second network from said second terminal, conducts communication with said first terminal via said second terminal.

11. A terminal of claim 10, wherein when the monitored results of said route do not satisfy prescribed conditions, the terminal adds its own address to said first packet and transmits the same to said second terminal.

12. A terminal of claim 10, wherein after transmitting said second packet, when quality of said route has been recovered, the terminal transmits a fourth packet which indicates that the quality of said route has been recovered to said second terminal.

13. A terminal of claim 10, wherein when the terminal has received once said first packet, the terminal discards said first packet.

14. A terminal of claim 10, wherein the terminal connects said first network and said second network by constructing a virtual network on said second network.
